# EUROPEAN PATENT APPLICATION

(11) **EP 4 653 818 A2**
(43) Date of publication of application: **26.11.2025**
(21) Application number: 25176455.1
(22) Date of filing: 14.05.2025
(51) Int. Cl.: G01C 23/00, G08G 5/21, G08G 5/26, G08G 5/34

(54) **SYSTEMS AND METHOD FOR PROVIDING A COLLABORATIVE MAP AND A DIGITAL ASSISTANT FOR AN AIRCRAFT**

(30) Priority: 20.05.2024 US 202463649727 P
(71) Applicant: AIRBUS S.A.S., 31700 Blagnac Cedex (FR)
(72) Inventor: DENIAUX, Emmanuel, 31700 BLAGNAC (FR); BIZET, Pierre, 31700 BLAGNAC (FR); RIGAUD, Jonathan, 31700 BLAGNAC (FR); SERVOLES, Sébastien, 31700 BLAGNAC (FR); LUCE-VAYRAC, Pierre, 31700 BLAGNAC (FR); LAGARRIGUE, Alain, 31700 BLAGNAC (FR); GIANNI, Frederick, 31700 BLAGNAC (FR)
(74) Representative: Cabinet Le Guen Maillet

(57) **Abstract**

A communication system (200) comprises aircraft equipment (200a) and on-ground equipment (200b) and uses a collaborative map, which has a graphic user interface that includes a plurality of digital layers that each display a different interface view, and a digital assistant to optimize missions of the aircraft on ground and in flight. A first instance (218a) of the collaborative map and a first instance (228a) of the digital assistant are onboard the aircraft for one or more pilots to view and interact with. At least one second instance (218b, 218c) of the collaborative map and a second instance (228b) of the digital assistant are on-ground for one or more operators to view and interact with. Communications are managed to ensure synchronization of the instances (218a, 218b, 218c) of the collaborative map and the instances (228a, 228b) of the digital assistant.

## Description

### TECHNICAL FIELD

The disclosure herein relates to systems and methods for enabling collaboration between aircraft equipment and on-ground equipment during a taxi phase or in flight. In particular, the disclosure herein relates to facilitating collaboration between an aircraft, Air Traffic Control (ATC) and Operations Control Center (OCC) of an airline with which the aircraft is associated.

### RELATED ART

During taxi-in, taxi-out, and in-flight, when all systems are functioning properly, the workload of pilots is considered acceptable and the risk of human error due to distraction or overwork is low. Nevertheless, any additional event that occurs increases the likelihood of such human error because the pilots during these phases need to spend time on the additional event, rather than the normal operating procedures during flight or taxiing the aircraft.

Today's systems help to reduce pilot workload and remove the risk of human error during taxi-in, taxi-out, and in-flight phases. However, it would be desirable to have a tool efficient enough to further reduce the pilot workload and accelerate exchanges between ground structures and the aircraft.

### SUMMARY OF THE INVENTION

It is proposed herein a communication system comprising electronic circuitry in an aircraft equipment onboard an aircraft and electronic circuitry in an on-ground equipment on the ground, wherein the communication system is configured to use a collaborative map having a graphic user interface that includes a plurality of digital layers that each display a different interface view and to generate a digital assistant to optimize missions of the aircraft on ground and in flight. Furthermore, the electronic circuitry of the aircraft equipment is configured to generate a first instance of the collaborative map on a first human-machine interface within the cockpit of the aircraft for one or more pilots to view and interact with, and to generate a first instance of the digital assistant on a second human-machine interface within the cockpit of the aircraft for the one or more pilots to view and interact with. Furthermore, the electronic circuitry of the on-ground equipment is configured to generate at least one second instance of the collaborative map on at least one respective human-machine interface for one or more operators to view and interact with, and to generate a second instance of the digital assistant. Furthermore, the electronic circuitry of the on-ground equipment is configured to manage communications between the at least one second instance of the collaborative map and the second instance of the digital assistant for interactions thereof. Furthermore, the aircraft equipment and the on-ground equipment are configured to cooperate to manage communications between the first instance of the collaborative map and the at least one second instance of the collaborative map for synchronization thereof and to manage communications between the first instance of the digital assistant and the second instance of the digital assistant for synchronization thereof.

Thus, thanks to the synchronized instances of the collaborative map and of the digital assistant, the pilot workload is reduced and exchanges between ground structures and the aircraft are accelerated. Indeed, all of them share the same view of the aircraft's situation with synchronized tools.

According to a particular embodiment, a graphic user interface of the first instance of the collaborative map is displayed on a first aircraft tablet within the cockpit of the aircraft and a graphic user interface of the digital assistant is displayed on a second aircraft tablet within the cockpit of the aircraft. Furthermore, the first aircraft tablet and the second aircraft tablet are each in communication with a server onboard the aircraft and the server exchanges data with the first aircraft tablet and the second aircraft tablet to display respectively for the collaborative map and the digital assistant.

According to a particular embodiment, the collaborative map includes a layers-visualization manager that includes several layers among:
- a visual display of the aircraft;
- a static aeronautical layer with airport ways, clearance points, and a digital terrain model;
- a dynamic aeronautical layer displaying dynamic aeronautical data including weather data, 3-dimensional maps, traffic in-flight and on ground;
- a message layer for Notice to Airmen NOTAM data;
- a trajectory layer with aircraft trajectories inflight and on-ground;
- a dialog layer displaying a dialog windows depicting present communication data between aircraft's pilots, Air Traffic Control, and Operations Control Center;
- a layer displaying proposal data to manage communications between aircraft's pilots, Air Traffic Control, and Operations Control Center;
- a feedback layer displaying feedback data and information from the aircraft's pilots to Air Traffic Control and Operations Control Center;
- a communication layer connected with the digital assistant to display optimizations, predictions, and monitoring performed by the digital assistant; and
- a performance layer depicting uses of on-ground server resources and on-board server resources to provide the collaborative map.

According to a particular embodiment, the collaborative map includes a clearance and flight plan manager configured to enter and display clearance messages from Air Traffic Control, and to send clearance requests from aircraft's pilots to Air Traffic Control, and to manage and edit flight plans for the aircraft.

According to a particular embodiment, the digital assistant includes optimization functions to optimize a flight plan and/or to optimize on-ground taxi phase.

According to a particular embodiment, the digital assistant includes prediction functions to make predictions regarding takeoff time, taxi time, and flight time of the aircraft, based on flight plan and weather and Notice to Airmen NOTAM information.

According to a particular embodiment, one second instance of the collaborative map is implemented by a server at Air Traffic Control, one second instance of the collaborative map is implemented by a server at Operations Control Center, and the second instance of the digital assistant is implemented by a cloud server.

According to a particular embodiment:
- the first instance of the collaborative map is configured to generate an interface to receive clearance indications from said one second instance of the collaborative map implemented by a server at Air Traffic Control and to display the received clearance indications;
- said one second instance of the collaborative map implemented by the server at Air Traffic Control is configured to generate and send clearance indications to the first instance of the collaborative map for entering a runway or for initiating taxi phase; and
- said one second instance of the collaborative map implemented by the server at Operations Control Center is synchronously modified in accordance.

According to a particular embodiment:
- the first instance of the collaborative map is configured to generate an interface to receive a new flight plan from said one second instance of the collaborative map implemented by the server at Operations Control Center and modify an existing flight plan;
- said one second instance of the collaborative map implemented by the server at Operations Control Center is configured to generate and send the new flight plan proposal to the first instance of the collaborative map for an approach phase of the aircraft and/or to send the new flight plan proposal to the first instance of the collaborative map for avoiding a weather hazard or contrail hazard, and
- said one second instance of the collaborative map implemented by the server at Air Traffic Control is synchronously modified in accordance.

According to a particular embodiment:
- said one second instance of the collaborative map implemented by the server at Air Traffic Control is configured to determine that the aircraft is cleared for taxiing to a take-off runway;
- said one second instance of the collaborative map implemented by the server at Air Traffic Control is configured to generate a clearance message and to send the clearance message to said one second instance of the collaborative map implemented by the server at Operations Control Center;
- said one second instance of the collaborative map implemented by the server at Operations Control Center is configured to receive the clearance message for the aircraft to begin taxiing and to calculate and optimize an on-ground trajectory of the aircraft for taxiing to the runway based on airport data, including data on other aircraft and their departure times;
- said one second instance of the collaborative map implemented by the server at Operations Control Center is configured to transmit the on-ground trajectory to the first instance of the collaborative map and to said one instance of the collaborative map implemented by the server at Air Traffic Control for synchronization and further display;
- said one second instance of the collaborative map implemented by the server at Operations Control Center is configured to transmit the on-ground trajectory to the second instance of the digital assistant; and
- the second instance of the digital assistant is configured to compute takeoff time, taxi time, and flight time, and to transmit these times to the first instance of the digital asistant for synchronization and further display in the cockpit.

According to a particular embodiment:
- the first instance of the digital assistant is configured to generate an interface to receive obstacle information provided by aircraft sensors and to modify a trajectory of the aircraft avoiding detected obstacles and to send updated trajectory information to the first instance of the collaborative map
- the first instance of the digital assistant is configured to notify the updated trajectory information to the second instance of the digital assistant for synchronization
- the first instance of the collaborative map is configured to communicate with the at least one second instance of the collaborative map for synchronization with respect to the updated trajectory information.

It is also proposed herein a communication method by a communication system comprising an aircraft equipment onboard an aircraft and an on-ground equipment on the ground, wherein the method comprises using a collaborative map having a graphic user interface that includes a plurality of digital layers that each display a different interface view and generating a digital assistant to optimize missions of the aircraft on ground and in flight. Furthermore, the method comprises generating a first instance of the collaborative map on a first human-machine interface within the cockpit of the aircraft for one or more pilots to view and interact with, and generating a first instance of the digital assistant on a second human-machine interface within the cockpit of the aircraft for the one or more pilots to view and interact with. Furthermore, the method comprises generating at least one second instance of the collaborative map on at least one respective human-machine interface for one or more operators to view and interact with, and generating a second instance of the digital assistant. Furthermore, the method comprises managing communications between the at least one second instance of the collaborative map and the second instance of the digital assistant for interactions thereof. Furthermore, the method comprises managing communications between the first instance of the collaborative map and the at least one second instance of the collaborative map for synchronization thereof and managing communications between the first instance of the digital assistant and the second instance of the digital assistant for synchronization thereof.

### BRIEF DESCRIPTION OF THE DRAWINGS

The characteristics of the invention will emerge more clearly from a reading of the following description of at least one example of embodiment, said description being produced with reference to the accompanying drawings, among which:
- Fig. 1 schematically represents a collaboration environment for aircraft operations, in accordance with one embodiment;
- Fig. 2A schematically represents a communication system configured for enabling the collaboration environment, in accordance with one embodiment;
- Fig. 2B schematically represents an example of a hardware system which can be used to implement one or more servers or computing devices for the communication system;
- Fig. 3 schematically represents the communication system with synchronized on-board equipment and on-ground equipment;
- Fig. 4 schematically represents a collaborative map, in accordance with one embodiment;
- Fig. 5 schematically represents a digital assistant, in accordance with one embodiment;
- Fig. 6 schematically represents an algorithm for enabling collaboration between the on-board equipment and the on-ground equipment.

### DETAILED DESCRIPTION OF AT LEAST ONE EMBODIMENT

The systems and techniques described herein provide an improvement over current technology by providing a synchronized system that implements direct communication between the pilot in the aircraft and, on -ground, the Air Traffic Control (ATC) and/or the Operations Control Center (OCC) of an airline with which the aircraft is associated. Additionally, the systems described herein improve the communication technology between pilots, ATC, and the OCC because they provide a structure to support the collaborative maps described herein, gathering and updating multiple sources of geo-referenced data, enhance situational awareness of the pilots, ATC, and OCC, and optimizes clearance management and support for weather avoidance.

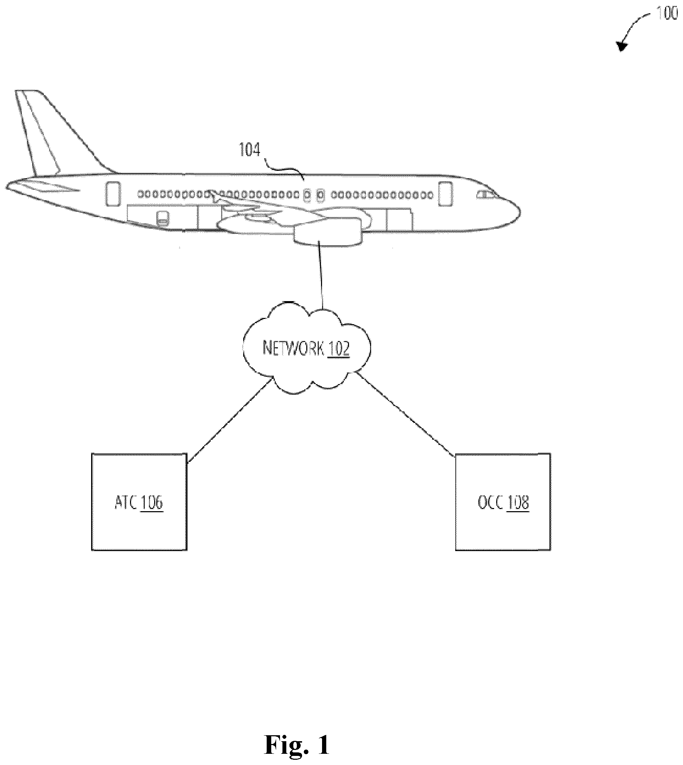

Fig. 1 schematically represents a collaboration environment 100 for operations of an aircraft 104, in accordance with one embodiment.

The aircraft 104 comprises avionics equipment, which provides computing ability to the aircraft 104. The aircraft's avionics equipment includes a position-awareness equipment enabling the avionics to know in real-time the geographical position of the aircraft 104, such as a GNSS (Global Navigation Satellite System) receiver, for example a GPS (Global Positioning System) receiver, a GLONASS receiver, a Galileo receiver...

The collaboration environment 100 includes a network 102 connecting computing devices onboard an aircraft 104 with computing devices associated with Air Traffic Control (ATC) 106 at an airport, and the Operations Control Center (OCC) 108 of an airline with which the aircraft 104 is associated.

In some embodiments, the network 102 can be any suitable network to allow on-ground computing devices of ATC 106 and OCC 108 to communicate with computing devices onboard the aircraft 104 whether on the ground or in the air. For example, in some embodiments, the network is a mobile communications network such as 3G, long term evolution (LTE), 4G, 5G, 6G, or any other suitable mobile communications network. The network 102 can further include a satellite-based communications network or a wired network for when the aircraft 104 is on the ground at an airport's gate, and preparing for takeoff (boarding, refueling...). In some embodiments, the network includes a wireless fidelity (Wi-Fi) network or Wireless Local Area Network (WLAN), for example, when the aircraft 104 is on the ground and is in close proximity to a Wireless Access Points (WAP).

In some embodiments, the computing devices described above, which the aircraft 104, ATC 106, and OCC 108 use to communicate with each other can include one or more servers located on or at each of the aircraft 104, the ATC 106, and the OCC 108. The servers are to communicate with each other over the network 102 using known protocols such as transport control protocol (TCP), user datagram protocol (UDP), Internet protocol (IP), or any other suitable method.

The systems and methods described herein that operate within the collaboration environment 100 correspond to a collaborative solution to provide better management of aircraft clearances, lower the use to radio transmissions between the pilots of the aircraft 104 and ATC 106 and/or OCC 108, and accelerate exchanges between such members of the collaboration environment 100 which support strategic decisions for aircraft operations.

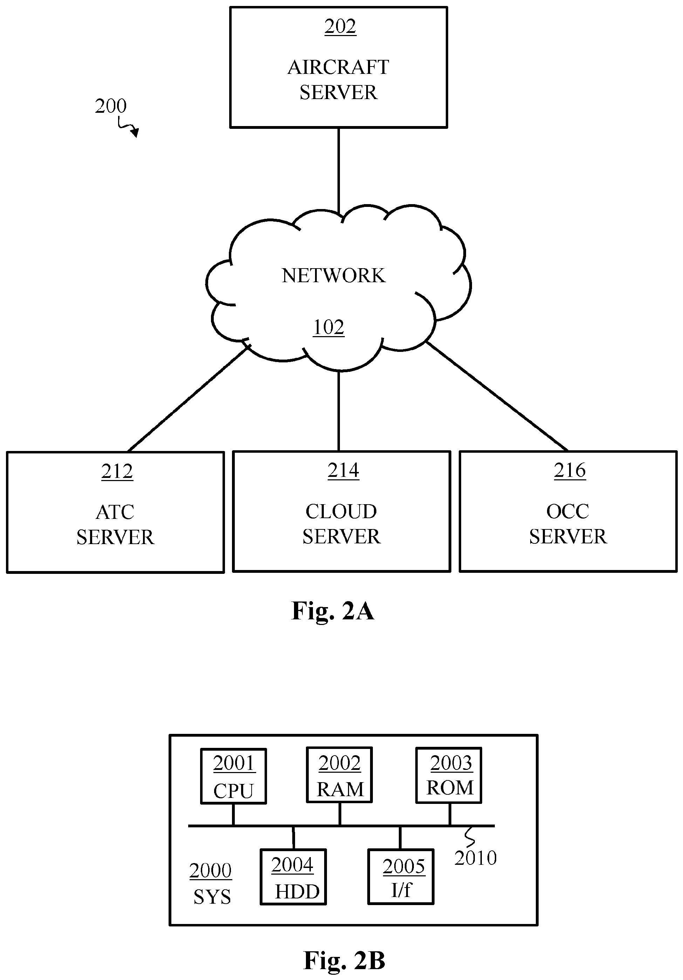

**Fig. 2A** schematically represents a communication system 200 configured for enabling the collaboration environment 100, in accordance with one embodiment.

The communication system 200 includes an aircraft server 202 onboard the aircraft 104. The aircraft server 202 may be part of the avionics of the aircraft 104. The communication system 200 further includes at least one on-ground server. In some embodiments, the at least one on-ground server includes an ATC server 212 operated by an operator of the ATC 106 for ATC-related operations. In some embodiments, the at least one on-ground server includes an OCC server 216 operated by an operator of the OCC 108.

In some embodiments, the at least one on-ground server includes a cloud server 214. The cloud server 214 can be located at any suitable location on the ground (*e.g.,* at OCC premises, at ATC premises, or any other suitable location with connection, such as an Internet connection, that allows communication between the cloud server 214 and any other on-ground server, such as the ATC server 212 and/or the OCC server 216.

The servers communicate with each other using the network 102 to maintain one or more applications. As disclosed herein, the one or more applications include a collaborative map and a digital assistant, and may further include any other suitable application. The applications are operated and maintained using the servers and graphic user interfaces (GUIs) associated with the applications are displayed on computing devices.

In some embodiments, the one or more servers also maintain one or more databases for collecting, receiving, and storing data thereon. For example, the aircraft server 202 may maintain a local database (aircraft database) 236 to store route data, geographic data, and other data regarding the aircraft 104, its location, or the airport at which it has landed or from which it will take off. Additionally, in some embodiments, the ATC server 212 and/or the OCC server 216, or some other entity such as the cloud server 214, may maintain a ground database 238 to maintain data regarding the airport, airline information, arrival and departure schedules, weather data, and other information.

**Fig. 2B** schematically represents an example of a hardware system SYS 2000 which can be used to implement any one of the server or computing devices used herein. The hardware system SYS 2000 can be used as well to implement other aircraft's avionics functionalities.

According to the shown example, the hardware system SYS 2000 comprises at least the following components interconnected by a communication bus 2010: a processor, microprocessor, microcontroller or CPU (Central Processing Unit) 2001; a RAM (Random-Access Memory) 2002; a ROM (Read-Only Memory) 2003 or an EEPROM (Electrically-Erasable Programmable ROM) such as a Flash memory; an HDD (Hard-Disk Drive) 2004 or an SD (Secure Digital) card reader, or any other device adapted to read information stored on non-transitory information storage medium; and at least one interface I/f 2005 including preferably a communication interface to enable communicating with other equipment of the communication system 200.

The CPU 2001 is capable of executing instructions loaded into the RAM 2002 from the ROM 2003 or from an external memory, such as an SD card. After the hardware system SYS 2000 has been powered on, the CPU 2001 is capable of reading instructions from the RAM 2002 and executing these instructions. The instructions form one or more computer program products that cause the CPU 2001 to perform some or all of the actions disclosed herein.

The subject matter disclosed herein can be implemented in or with software in combination with hardware and/or firmware. For example, the subject matter described herein can be implemented in software by execution of a set of instructions or program by a processor or processing unit or a programmable computing machine, such as a DSP (Digital Signal Processor). The subject matter disclosed herein can be implemented in hardware form by a machine or a dedicated chip or chipset, such as an FPGA (Field-Programmable Gate Array) or an ASIC (Application-Specific Integrated Circuit). In general, the communication system 200 and the servers thereof comprise processing electronics circuitry adapted and configured for implementing the subject matter disclosed herein.

Some embodiments of the disclosed system may be implemented, for example, using a storage medium, a computer-readable medium or an article of manufacture which may store an instruction or a set of instructions that, when executed by a machine (e.g., processor, processing circuit, or microcontroller), may cause the machine to perform a method and/or operations in accordance with embodiments of the disclosure. In addition, a server or database server may include machine readable media configured to store machine executable program instructions. Such a machine may include, for example, any suitable processing platform, computing platform, computing device, processing device, computing system, processing system, computer, processor, or the like, and may be implemented using any suitable combination of hardware, software, firmware, or a combination thereof and utilized in systems, subsystems, components, or sub-components thereof. The computer-readable medium or article may include, for example, any suitable type of memory unit, memory device, memory article, memory medium, storage device, storage article, storage medium and/or storage unit, for example, memory (including non-transitory memory), removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

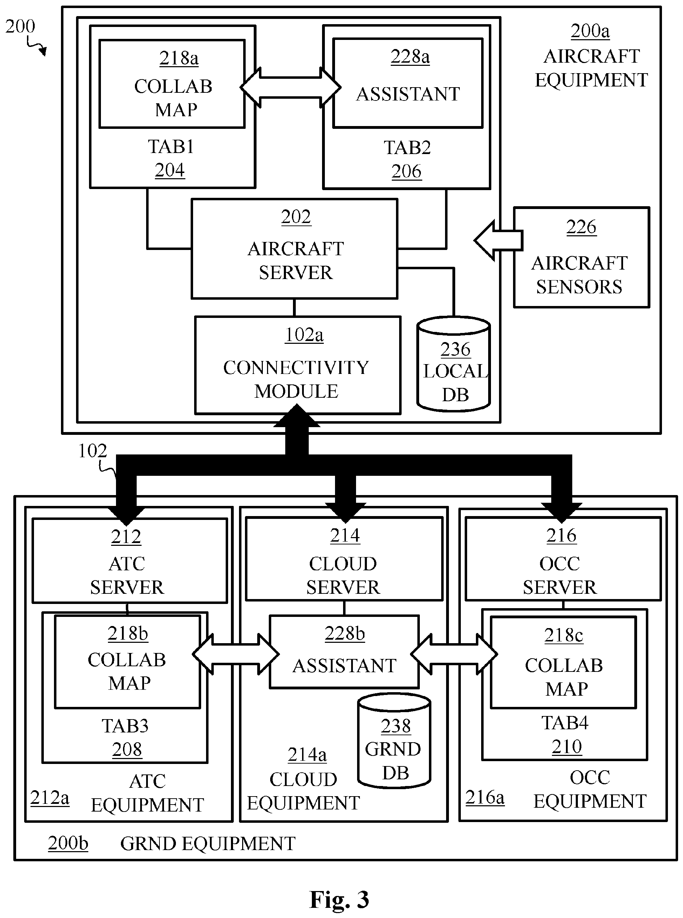

**Fig. 3** schematically represents the communication system 200 with synchronized on-board equipment 200a and on-ground equipment 200b.

The on-board equipment 200a includes the aircraft server 202, which implements an instance 218a of a collaborative map 218 and an instance 228a of a digital assistant 228.

The on-board equipment 200a includes HMI (Human-Machine Interface) enabling devices, such as displays, for example part of a Cockpit Display System (CDS), or touch screens or tablets, thus enabling interactions with the pilot(s) of the aircraft 104.

In some embodiments, the HMI-enabling devices onboard the aircraft 104 include a first aircraft tablet 204 and a second aircraft tablet 206 provided to display various data and receive data from the pilot(s). In some embodiments, the first aircraft tablet 204 and the second aircraft tablet 206 may each include a mobile device such as a tablet computer, mobile phone, smart phone, personal data assistant, iPad, or any other suitable mobile device or tablet-like computing device, such as an EFB (Electronic Flight Bag) device. Each of the first aircraft tablet 204 and the second aircraft tablet 206 are controlled by respective processing circuits on each tablet. As such, when referring to one or more processing circuits onboard the aircraft 104, the present disclosure may be referring to processing circuits operating on the first aircraft tablet 204 or the second aircraft tablet 206.

For example, the first aircraft tablet 204 may display a GUI for the collaborative map 218 and the second aircraft tablet 206 may display the GUI for the digital assistant 228. For example, the first aircraft tablet 204 in the cockpit includes a downloaded first mobile application corresponding to the collaborative map 218 and the second aircraft tablet 206 in the cockpit includes a downloaded second mobile application corresponding to the digital assistant 228.

The tablets, including first aircraft tablet 204 and second aircraft tablet 206, are to receive data from the aircraft server 202 to display on their respective screens and also send data from inputs from the pilot(s) to the aircraft server 202.

The on-ground equipment 200b includes at least one server, which implements at least one instance 218b, 218c of the collaborative map 218 and an instance 228b of the digital assistant 228. In some embodiments, the on-ground equipment 200b includes ATC equipment 212a, OCC equipment 216a and cloud equipment 214a, with:
- the ATC server 212 in the ATC equipment 212a, which implements one instance 218b of the collaborative map 218;
- the OCC server 216 in the OCC equipment 216a, which implements one instance 218c of the collaborative map 218; and
- the cloud server 214 in the cloud equipment 214a, which implements the instance 228b of the digital assistant 228.

The on-ground equipment 200b includes HMI-enabling devices, such as displays or touch screens or tablets, thus enabling interactions with on-ground operator(s). For example, the ATC equipment 212a includes a first on-ground tablet 208 and the OCC equipment 216a includes a second on-ground tablet 210. The first on-ground tablet 208 and the second on-ground tablet 210 are provided to display various data and receive data from the on-ground operator(s). In some embodiments, the first on-ground tablet 208 and the second on-ground tablet 210 may each include a mobile device such as a tablet computer, mobile phone, smart phone, personal data assistant, iPad, or any other suitable mobile device or tablet-like computing device. Each of the first on-ground tablet 208 and the second on-ground tablet 210 are controlled by respective processing circuits on each tablet. As such, when referring to one or more processing circuits on the ground, the present disclosure may be referring to processing circuits operating on the first on-ground tablet 208 or the second on-ground tablet 210.

For example, the first on-ground tablet 208 and the second on-ground tablet 210 may display the GUI for the collaborative map 218. For example, the first on-ground tablet 208 and the second on-ground tablet 210 include each a downloaded mobile application corresponding to the collaborative map 218.

The on-board equipment 200a includes a connectivity module 102a configured to connect the on-board equipment 200a to the network 102. When connectivity with the network 102 is lost, the aircraft server 202 is configured to solely maintain the local instance 218a of the collaborative map 218 and the local instance 228a of the digital assistant 228 with respect to information and data received by the on-board equipment 200a (*e.g.,* inputs from the pilot(s) or from aircraft sensors 226), and to resynchronize with the at least one instance 218b, 218c of the collaborative map 218 and the instance 228b of the digital assistant 228 when connectivity with the network 102 is restored.

In some embodiments, the on-board equipment 200a includes the aircraft sensors 226, such as ADS-B (Automatic Dependent Surveillance-Broadcast) and/or LIDAR (Light Detection And Ranging), or other capture systems used to detect obstacles in proximity of the aircraft 104.

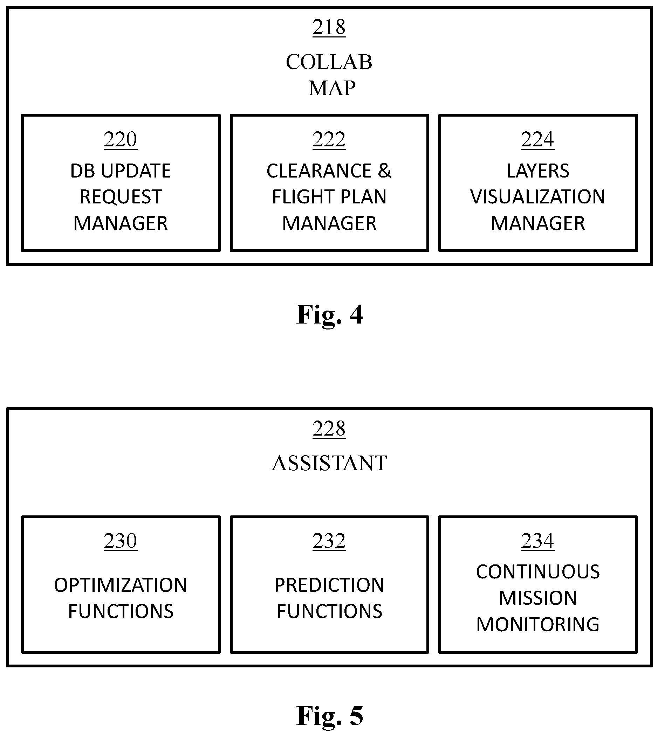

**Fig. 4** schematically represents the collaborative map 218, in accordance with one embodiment.

The GUI of the collaborative map 218 includes a plurality of digital layers that each display a different interface view to the pilot(s) or operator(s).

The collaborative map 218 includes a database update request manager 220, a clearance and flight plan manager 222, and a layers-visualization manager 224.

The database update request manager 220 is configured to allow the pilot(s) or operator(s) to select and update data respectively in the aircraft database 236 or in the ground database 238. Data contained in the aircraft database 236 and in the ground database 238 may be synchronized. Some data contained in the aircraft database 236 and in the ground database 238 may be synchronized automatically, and some data contained in the aircraft database 236 and in the ground database 238 may be synchronized on-demand (manually).

The clearance and flight plan manager 222 is configured to enter and display clearance messages from ATC operator(s) regarding the aircraft being cleared for taking off, landing, or entering a runway. The clearance and flight plan manager 222 may further be configured to allow the pilot(s) to send clearance requests to ATC operator(s) regarding the aircraft being cleared for taking off, landing, or entering a runway. The clearance and flight plan manager 222 is preferably configured to generate interfaces to accelerate clearance process with text-based enablers for the pilot(s) to select.

The clearance and flight plan manager 222 is also configured to allow the pilot(s) to manage and edit flight plans for the aircraft 104 as needed (*e.g.,* in an adverse weather event or airport or runway closure at a destination airport).

In some embodiments, the instance 218a of the collaborative map 218 is displayed on a human-machine interface (GUI) of the first aircraft tablet 204 and at least one instance 218b, 218c of the collaborative map 218 is displayed on a human-machine interface (GUI) of on-ground equipment. In some embodiments, the instance 218b of the collaborative map 218 is displayed on a human-machine interface (GUI) of the ATC equipment 212a and the instance 218c of the collaborative map 218 is displayed on a human-machine interface (GUI) of the OCC equipment 216a.

The layers-visualization manager 224 is configured to visualize a plurality of different layers or windows on screen. More specifically, the GUI of the collaborative map 218 includes a plurality of layers for the pilot(s) or operator(s) to view and interact with, each of the plurality of layers illustrating a discrete set of images or data. The layers may be visualized as one or more pages or one or more windows which each depict a different aspect of the aircraft 104, the weather, a flight or ground trajectory of the aircraft 104, or any other function described herein. For example, in some embodiments, the different layers displayed on the GUI of the collaborative map 218 by the layers-visualization manager 224 includes several layers among: a visual display of the aircraft 104; a static aeronautical layer with airport ways, clearance points, and a digital terrain model; a dynamic aeronautical layer displaying dynamic aeronautical data including weather data, 3-dimensional maps, traffic in-flight and on ground; a message layer for NOTAM (Notice to Airmen) information; a trajectory layer with aircraft trajectories inflight and on-ground; a dialog layer displaying a dialog windows depicting present communication data between the pilots, ATC 106, and the OCC 108; a layer displaying proposal data to manage communications between the pilots, ATC 106 and OCC 108; a feedback layer displaying feedback data and information from the pilot(s) to ATC 106 and OCC 108; a communication layer connected with the digital assistant 228 to display optimizations, predictions, and monitoring performed by the digital assistant 228; and a performance layer depicting uses of on-ground server resources and on-board server resources to provide the collaborative map 218.

**Fig. 5** schematically represents the digital assistant 228, in accordance with one embodiment.

The digital assistant 228 is configured to optimize missions of the aircraft 104 on the ground (taxiing) and in flight, to compute flight predictions and to provide outputs to the pilot(s) to allow a continuous monitoring of tasks that allow optimization of missions of the aircraft 104 taxiing on the ground and in flight. To do so, the digital assistant 228 includes optimization functions 230, prediction functions 232 and continuous mission monitoring 234.

The optimization functions 230 allow the digital assistant 228 to optimize a flight plan and/or to optimize on-ground taxi phase, typically in view of detected obstacles.

The prediction functions 232 allow the digital assistant 228 to make predictions regarding takeoff time, taxi time, and flight time of the aircraft 104, based on the flight plan and weather and NOTAM information and potentially other documentation data. The prediction functions 232 also allow the digital assistant 228 to predict a trajectory of the aircraft 104 based on the extracted data and the predicted takeoff time, taxi time, and flight time, and modify the trajectory in real-time depending on weather events during the flight as well as on potential other external events.

In some embodiments, the prediction functions 232 allow modifying the trajectory of the aircraft according to obstacles detected with respect to a current trajectory of the aircraft 104, such as weather obstacles in flight or airport's traffic when taxiing on the ground. Such obstacles are for example detected using the aircraft sensors 226 or NOTAM information.

The continuous mission monitoring 234 allows the digital assistant 228 to continuously monitor the trajectory and status of the aircraft 104. It provides additional help to the optimization functions 230 and provides data thereto to help generate optimizations of the flight plan and/or of the on-ground taxi phase.

In some embodiments, the digital assistant 228 is configured to create a flight plan route for the aircraft 104. The digital assistant 228 may further create a digital folder with identification of weather and NOTAM information relevant to the flight plan, extract weather and NOTAM information from the digital folder as well as potentially other documentation data, and generate a performance forecast based on the weather and NOTAM information and the documentation data.

In some embodiments, the digital assistant 228 is configured to predict a takeoff time, taxi time, and flight time based on the flight plan and the weather and NOTAM information and the documentation data. The digital assistant 228 is configured to predict a trajectory of the aircraft 104 based on the extracted data and the predicted takeoff time, taxi time, and flight time, and modify the trajectory in real-time depending on a weather event during the flight and other external events.

In some embodiments, the predictions and related calculations are performed by a combination of the aircraft equipment 200a and the ground equipment 200b. For example, most of the more complicated calculations are performed with the cloud server 214 with respect to the instance 228b of the digital assistant 228 and then shared with the aircraft server 202 for update of the instance 228a of the digital assistant 228, with GUI information thereof being then sent to the second aircraft tablet 206 for display to the pilot(s).

In some embodiments, the instance 228a of the digital assistant 228 onboard the aircraft 104 performs optimization and monitoring of trajectory predictions, and takeoff time, taxi time, and flight time predictions, made by the instance 228b of the digital assistant 228 on the ground. Then, as the operator(s) interacts with the instance 228b of the digital assistant 228 on the ground, the interactions and inputs from the operator(s) are sent from the cloud server 214 to the aircraft server 202 for synchronization. On the other hand, the instance 228b of the digital assistant 228 on the ground focuses more on predictions and generating the trajectories, and then consider optimizations and monitoring based on any optimizations and monitoring proposed by the instance 228a of the digital assistant 228 onboard the aircraft 104. Thus, as the pilot(s) interacts with the instance 228a of the digital assistant 228 onboard the aircraft 104 (*e.g.,* using the second aircraft tablet 206), the interactions and inputs from the pilot(s) are sent from the aircraft server 202 to the cloud server 214 for synchronization.

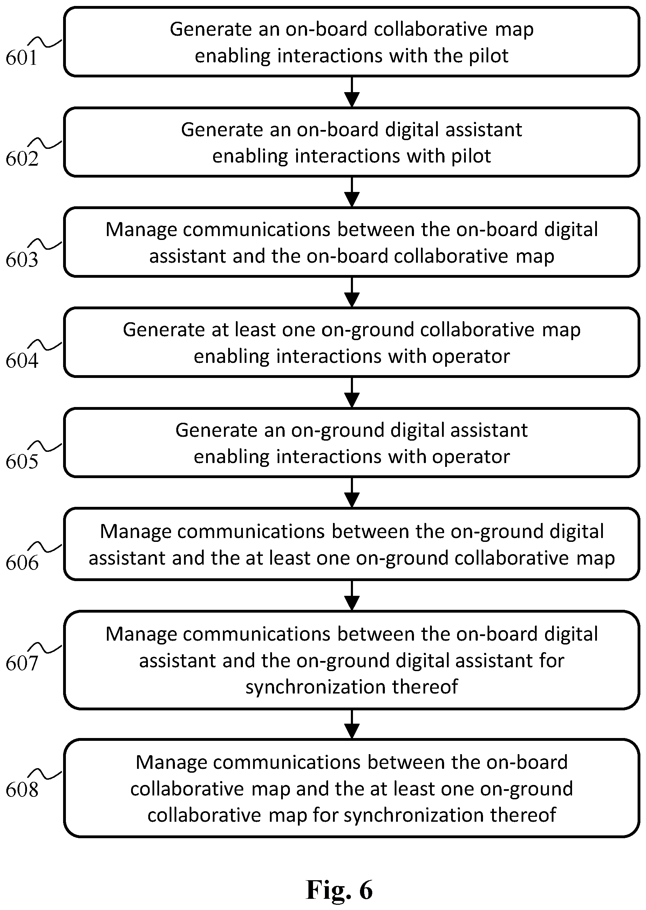

**Fig. 6** schematically represents an algorithm for enabling collaboration between the on-board equipment 200a and the on-ground equipment 200b.

In a step 601, the on-board equipment 200a (typically by processing circuits thereof) generates an on-board collaborative map enabling interactions with the pilot(s). More particularly, the on-board equipment 200a generates the instance 218a of the collaborative map 218.

In a step 602, the on-board equipment 200a (typically by processing circuits thereof) generates an on-board digital assistant enabling interactions with the pilot(s). More particularly, the on-board equipment 200a generates the instance 228a of the digital assistant 228.

In a step 603, in a preferred embodiment, the on-board equipment 200a (typically by processing circuits thereof) manages communications between the on-board digital assistant and the on-board collaborative map. More particularly, the on-board equipment 200a manages communications between the instance 228a of the digital assistant 228 and the instance 218a of the collaborative map 218.

In a step 604, the on-ground equipment 200b (typically by processing circuits thereof) generates at least one on-ground collaborative map enabling interactions with the operator(s). More particularly, the on-ground equipment 200b generates at least one instance 218b, 218c of the collaborative map 218. In a particular embodiment, the on-ground equipment 200b generates the instance 218b of the collaborative map 218 at the ATC equipment 212a and generates the instance 218c of the collaborative map 218 at the OCC equipment 216a.

In a step 605, the on-ground equipment 200b (typically by processing circuits thereof) generates an on-ground digital assistant enabling interactions with the operator(s). More particularly, the on-ground equipment 200b generates the instance 228b of the digital assistant 228. In a particular embodiment, the on-ground equipment 200b generates the instance 228b of the digital assistant 228 at the cloud server 214. Interactions with operators are then operated through the ATC equipment 212a and/or the OCC equipment 216a.

In a step 606, the on-ground equipment 200b (typically by processing circuits thereof) manages communications between the on-ground digital assistant and the at least one on-ground collaborative map for interactions thereof, *e.g.,* for the at least one on-ground collaborative map to request optimizations and/or predictions to the on-ground digital assistant. More particularly, the on-ground equipment 200b manages communications between the instance 228b of the digital assistant 228 and the at least one instance 218b, 218c of the collaborative map 218 for interactions thereof. Said communications may be performed via a secure communication channel.

In some embodiments, when several instances of the on-ground collaborative map exist, the on-ground equipment 200b (typically by processing circuits thereof) manages communications between the several instances of the on-ground collaborative map for synchronization thereof. Said communications may be performed via a secure communication channel.

**In** a step 607, the on-board equipment 200a and the on-ground equipment 200b (typically by processing circuits thereof) cooperate to manage communications between the on-board digital assistant and the on-ground digital assistant for synchronization thereof. More particularly, the on-board equipment 200a and the on-ground equipment 200b cooperate to manage communications between the instance 228a of the digital assistant 228 (on-board) and the instance 228b of the digital assistant 228 (on-ground, *e.g.,* at the cloud server 214) for synchronization thereof. Said communications may be performed via a secure communication channel.

**In** a step 608, the on-board equipment 200a and the on-ground equipment 200b (typically by processing circuits thereof) cooperate to manage communications between the on-board collaborative map and the at least one on-ground collaborative map for synchronization thereof. More particularly, the on-board equipment 200a and the on-ground equipment 200b cooperate to manage communications between the instance 218a of the collaborative map 218 (on-board) and the at least one instance 218b, 218c of the collaborative map 218 (on-ground) for synchronization thereof. Said communications may be performed via a secure communication channel.

According to an example, the instance 218a of the collaborative map 218 (at the aircraft 104) is configured to generate an interface to receive clearance indications from the instance 218b of the collaborative map 218 (at the ATC 106) and to display the received clearance indications. The instance 218b of the collaborative map 218 (at the ATC 106) is configured to generate and send clearance indications to the instance 218a of the collaborative map 218 (at the aircraft 104) for entering a runway or for initiating taxi phase. The instance 218c of the collaborative map 218 (at the OCC 108) is synchronously modified in accordance.

According to another example, the instance 218a of the collaborative map 218 (at the aircraft 104) is configured to generate an interface to receive a new flight plan from the instance 218c of the collaborative map 218 (at the OCC 108) and modify an existing flight plan. The instance 218c of the collaborative map 218 (at the OCC 108) is configured to generate and send a new flight plan proposal to the instance 218a of the collaborative map 218 (at the aircraft 104) for an approach phase of the aircraft and/or to send a new flight plan proposal to the instance 218a of collaborative map 218 (at the aircraft 104) for avoiding a weather hazard or contrail hazard. The instance 218b of the collaborative map 218 (at the ATC 106) is synchronously modified in accordance.

According to yet another example, the instance 218b of the collaborative map 218 (at the ATC 106) determines that the aircraft is cleared for taxiing to a take-off runway. Following the clearance determination, the instance 218b of the collaborative map 218 (at the ATC 106) generates a clearance message and sends the clearance message to the instance 218c of the collaborative map 218 (at the OCC 108). The instance 218c of the collaborative map 218 (at the OCC 108) then receives the clearance message for the particular aircraft to begin taxiing. The instance 218c of the collaborative map 218 (at the OCC 108) then calculates an on-ground trajectory of the aircraft for taxiing to the runway and this trajectory is optimized by the instance 218c of the collaborative map 218 (at the OCC 108) based on airport data, including data on other aircraft and their departure times. The instance 218c of the collaborative map 218 (at the OCC 108) also optimizes the on-ground trajectory based on weather data and other data regarding the environment of the airport. Once the on-ground trajectory is selected and optimized, the instance 218c of the collaborative map 218 (at the OCC 108) transmits the taxiing trajectory to the instance 218a of the collaborative map 218 (on-board) and to the instance 218b of the collaborative map 218 (at the ATC 106) for synchronization and further display. Moreover, the instance 218c of the collaborative map 218 (at the OCC 108) transmits the taxiing trajectory to the instance 228b of the digital assistant 228 (on-ground, *e.g.,* at the cloud server 214). The instance 228b of the digital assistant 228 estimates or computes the takeoff time, taxi time, and flight time based on the various factors discussed above, and transmits these times to the first instance 228a of the digital assistant 228 (on-board) for synchronization and further display in the cockpit.

According to yet another example, the instance 228a of the digital assistant 228 (at the aircraft 104) is configured to generate an interface to receive obstacle information provided by the aircraft sensors 226 and to modify a trajectory of the aircraft avoiding detected obstacles (e.g., taxiing trajectory avoiding traffic at the airport) and to send updated trajectory information to the instance 218a of the collaborative map 218 (at the aircraft 104). The instance 228a of the digital assistant 228 (at the aircraft 104) is configured to notify the updated trajectory information to the instance 228b of the digital assistant 228 (on-ground, *e.g.,* at the cloud server 214) for synchronization purpose. And the instance 218a of the collaborative map 218 (at the aircraft 104) communicates with the at least one instance 218b, 218c of the collaborative map 218 (on-ground) for synchronization purposes.

It is apparent from what precedes that each of the on-board equipment 200a and on-ground equipment 200b can receive new information from various sources (data from on-board sensors, weather data from a weather server, airport data from airport servers, and NOTAM information from NOTAM servers...), and whichever instance of the collaborative map 218 or whichever instance of the digital assistant 228 processes the new information, each other instance of the collaborative map 218 or of the digital assistant 228 is automatically updated in accordance thanks to the synchronization in place.

As used herein, an element or operation recited in the singular and proceeded with the word "a" or "an" should be understood as not excluding plural elements or operations, unless such exclusion is explicitly recited. Furthermore, references to "one embodiment" of the present disclosure are not intended to be interpreted as excluding the existence of additional embodiments that also incorporate the recited features.

## Claims

1. A communication system (200) comprising electronic circuitry in an aircraft equipment (200a) onboard an aircraft (104) and electronic circuitry in an on-ground equipment (200b) on the ground,
wherein the communication system (200) is configured to use a collaborative map (218) having a graphic user interface that includes a plurality of digital layers that each display a different interface view and to generate a digital assistant (228) to optimize missions of the aircraft (104) on ground and in flight,
wherein the electronic circuitry of the aircraft equipment (200a) is configured to generate (601) a first instance (218a) of the collaborative map (218) on a first human-machine interface (204) within the cockpit of the aircraft (104) for one or more pilots to view and interact with, and to generate (602) a first instance (228a) of the digital assistant (228) on a second human-machine interface (206) within the cockpit of the aircraft (104) for the one or more pilots to view and interact with,
wherein the electronic circuitry of the on-ground equipment (200b) is configured to generate (604) at least one second instance (218b, 218c) of the collaborative map (218) on at least one respective human-machine interface for one or more operators to view and interact with, and to generate (605) a second instance (228b) of the digital assistant (228),
wherein the electronic circuitry of the on-ground equipment (200b) is configured to manage (606) communications between the at least one second instance (218b, 218c) of the collaborative map (218) and the second instance (228b) of the digital assistant (228) for interactions thereof, and
wherein the aircraft equipment (200a) and the on-ground equipment (200b) are configured to cooperate to manage (608) communications between the first instance (218a) of the collaborative map (218) and the at least one second instance (218b, 218c) of the collaborative map (218) for synchronization thereof and to manage (607) communications between the first instance (228a) of the digital assistant (228) and the second instance (228b) of the digital assistant (228) for synchronization thereof.

2. The communication system (200) according to claim 1, wherein a graphic user interface of the first instance (218a) of the collaborative map (218) is displayed on a first aircraft tablet within the cockpit of the aircraft (104) and a graphic user interface of the digital assistant (228) is displayed on a second aircraft tablet within the cockpit of the aircraft (104),
wherein the first aircraft tablet and the second aircraft tablet are each in communication with a server (202) onboard the aircraft (104) and the server (202) is configured to exchange data with the first aircraft tablet and the second aircraft tablet to display respectively for the collaborative map (218) and the digital assistant (228).

3. The communication system (200) according to claim 1 or 2, wherein the collaborative map (218) includes a layers-visualization manager (224) that includes several layers among:
- a visual display of the aircraft;
- a static aeronautical layer with airport ways, clearance points, and a digital terrain model;
- a dynamic aeronautical layer displaying dynamic aeronautical data including weather data, 3-dimensional maps, traffic in-flight and on ground;
- a message layer for Notice to Airmen NOTAM data;
- a trajectory layer with aircraft trajectories inflight and on-ground;
- a dialog layer displaying a dialog windows depicting present communication data between aircraft's pilots, Air Traffic Control, and Operations Control Center;
- a layer displaying proposal data to manage communications between aircraft's pilots, Air Traffic Control, and Operations Control Center;
- a feedback layer displaying feedback data and information from the aircraft's pilots to Air Traffic Control and Operations Control Center;
- a communication layer connected with the digital assistant to display optimizations, predictions, and monitoring performed by the digital assistant; and
- a performance layer depicting uses of on-ground server resources and on-board server resources to provide the collaborative map (218).

4. The communication system (200) according to any one of claims 1 to 3, wherein the collaborative map (218) includes a clearance and flight plan manager (222) configured to enter and display clearance messages from Air Traffic Control (106), and to send clearance requests from aircraft's pilots to Air Traffic Control (106), and to manage and edit flight plans for the aircraft (104).

5. The communication system (200) according to any one of claims 1 to 4, wherein the digital assistant (228) includes optimization functions (230) to optimize a flight plan and/or to optimize on-ground taxi phase.

6. The communication system (200) according to any one of claims 1 to 5, wherein the digital assistant (228) includes prediction functions (232) to make predictions regarding takeoff time, taxi time, and flight time of the aircraft, based on flight plan and weather and Notice to Airmen NOTAM information.

7. The communication system (200) according to any one of claims 1 to 6, wherein:
- one second instance (218b) of the collaborative map (218) is implemented by a server (212) at Air Traffic Control (106);
- one second instance (218c) of the collaborative map (218) is implemented by a server (216) at Operations Control Center (108); and
- the second instance (228b) of the digital assistant (228) is implemented by a cloud server (214).

8. The communication system (200) according to claim 7, wherein:
- the first instance (218a) of the collaborative map (218) is configured to generate an interface to receive clearance indications from said one second instance (218b) of the collaborative map (218) implemented by a server (212) at Air Traffic Control (106) and to display the received clearance indications;
- said one second instance (218b) of the collaborative map (218) implemented by the server (212) at Air Traffic Control (106) is configured to generate and send clearance indications to the first instance (218a) of the collaborative map (218) for entering a runway or for initiating taxi phase;
- said one second instance (218c) of the collaborative map (218) implemented by the server (216) at Operations Control Center (108) is synchronously modified in accordance.

9. The communication system (200) according to claim 7 or 8, wherein:
- the first instance (218a) of the collaborative map (218) is configured to generate an interface to receive a new flight plan from said one second instance (218c) of the collaborative map (218) implemented by the server (216) at Operations Control Center (108) and modify an existing flight plan;
- said one second instance (218c) of the collaborative map (218) implemented by the server (216) at Operations Control Center (108) is configured to generate and send the new flight plan proposal to the first instance (218a) of the collaborative map (218) for an approach phase of the aircraft (104) and/or to send the new flight plan proposal to the first instance (218a) of the collaborative map (218) for avoiding a weather hazard or contrail hazard; and
- said one second instance (218b) of the collaborative map (218) implemented by the server (212) at Air Traffic Control (106) is synchronously modified in accordance.

10. The communication system (200) according to any one of claims 7 to 9, wherein:
- said one second instance (218b) of the collaborative map (218) implemented by the server (212) at Air Traffic Control (106) is configured to determine that the aircraft (104) is cleared for taxiing to a take-off runway;
- said one second instance (218b) of the collaborative map (218) implemented by the server (212) at Air Traffic Control (106) is configured to generate a clearance message and to send the clearance message to said one second instance (218c) of the collaborative map (218) implemented by the server (216) at Operations Control Center (108);
- said one second instance (218c) of the collaborative map (218) implemented by the server (216) at Operations Control Center (108) is configured to receive the clearance message for the aircraft (104) to begin taxiing and to calculate and optimize an on-ground trajectory of the aircraft (104) for taxiing to the runway based on airport data, including data on other aircraft and their departure times;
- said one second instance (218c) of the collaborative map (218) implemented by the server (216) at Operations Control Center (108) is configured to transmit the on-ground trajectory to the first instance (218a) of the collaborative map (218) and to said one second instance (218b) of the collaborative map (218) implemented by the server (212) at Air Traffic Control (106) for synchronization and further display;
- said one second instance (218c) of the collaborative map (218) implemented by the server (216) at Operations Control Center (108) is configured to transmit the on-ground trajectory to the second instance (228b) of the digital assistant (228); and
- the second instance (228b) of the digital assistant (228) is configured to compute takeoff time, taxi time, and flight time, and to transmit these times to the first instance (228a) of the digital assistant (228) for synchronization and further display in the cockpit.

11. The communication system (200) according to any one of claims 7 to 10, wherein:
- the first instance (228a) of the digital assistant (228) is configured to generate an interface to receive obstacle information provided by aircraft sensors (226) and to modify a trajectory of the aircraft (104) avoiding detected obstacles and to send updated trajectory information to the first instance (218a) of the collaborative map (218);
- the first instance (228a) of the digital assistant (228) is configured to notify the updated trajectory information to the second instance (228b) of the digital assistant (228) for synchronization; and
- the first instance (218a) of the collaborative map (218) is configured to communicate with the at least one second instance (218b, 218c) of the collaborative map (218) for synchronization with respect to the updated trajectory information.

12. A communication method by a communication system (200) comprising an aircraft equipment (200a) onboard an aircraft (104) and an on-ground equipment (200b) on the ground,
wherein the method comprises using a collaborative map (128) having a graphic user interface that includes a plurality of digital layers that each display a different interface view and generating a digital assistant (228) to optimize missions of the aircraft (104) on ground and in flight,
wherein the method comprises generating (601) a first instance (218a) of the collaborative map (218) on a first human-machine interface (204) within the cockpit of the aircraft (104) for one or more pilots to view and interact with, and generating (602) a first instance (228a) of the digital assistant (228) on a second human-machine interface (206) within the cockpit of the aircraft (104) for the one or more pilots to view and interact with,
wherein the method comprises generating (604) at least one second instance (218b, 218c) of the collaborative map (218) on at least one respective human-machine interface for one or more operators to view and interact with, and generating (605) a second instance (228b) of the digital assistant (228),
wherein the method comprises managing (606) communications between the at least one second instance (218b, 218c) of the collaborative map (218) and the second instance (228b) of the digital assistant (228) for interactions thereof, and
wherein the method comprises managing (608) communications between the first instance (218a) of the collaborative map (218) and the at least one second instance (218b, 218c) of the collaborative map (218) for synchronization thereof and managing (607) communications between the first instance (228a) of the digital assistant (228) and the second instance (228b) of the digital assistant (228) for synchronization thereof.
